# EUROPÄISCHE PATENTSCHRIFT

(11) **EP 0 670 173 B1**
(45) Veröffentlichungstag und Bekanntmachung des Hinweises auf die Patenterteilung: **06.05.1998**
(21) Anmeldenummer: 95810114.9
(22) Anmeldetag: 20.02.1995
(51) Int. Cl.: B01D 46/42, B01D 46/02, B01D 46/06

(54) **Verfahren zur Herstellung eines Frontrahmens zur Aufnahme von Filtertaschen für Filteranlagen**
Process of manufacturing a front frame for the incorporation of filter bags in filtration devices
Procédé de fabrication d'un cadre frontal pour la réception des sacs filtrants des installations de filtration

(30) Priorität: 01.03.1994 CH 595/94
(43) Veröffentlichungstag der Anmeldung: 06.09.1995
(73) Patentinhaber: ZENTECO AG, CH-5430 Wettingen (CH)
(72) Erfinder: Ernst, Beat, CH-5430 Wettingen (CH)
(74) Vertreter: Bosshard, Ernst

(56) Entgegenhaltungen:
- EP-A- 0 581 735
- DE-U- 8 308 859

## Beschreibung

Die Erfindung bezieht sich auf ein Verfahren zur Herstellung eines Frontrahmens zur Aufnahme von Filtertaschen für Filteranlagen, insbesondere Luftfilteranlagen.

Ferner bezieht sich die Erfindung auf einen Frontrahmen zur Aufnahme von Filtertaschen für Filteranlagen, insbesondere Luftfilteranlagen.

Derartige Frontrahmen dienen zur Aufnahme von Filtertaschen und bilden Filtereinheiten. Diese lassen sich gruppenweise zu ganzen Filteranlagen zusammenbauen und dienen zur Reinigung von Luft- oder Gasströmen. Sie bestehen in der Regel aus unterschiedlichen Grundmaterialien. Die Frontrahmen zur Aufnahme von Filtertaschen werden üblicherweise aus Metall, Kunststoff oder Holz hergestellt, während das eigentliche Filtermedium feinporiges Faservlies ist, das aus natürlichen oder künstlichen Materialien besteht. Wenn die Filtertaschen nach einer gewissen Betriebszeit mit Schadstoffen gesättigt sind, müssen sie ersetzt werden. Nachteilig ist jedoch, dass zur Entsorgung solcher gesättigter, also mit Staub und Schmutzpartikeln beladenen Filtertaschen diese mühsam manuell von den üblicherweise metallischen oder aus Kunststoff bestehenden Frontrahmen getrennt werden müssen, da die Annahmestellen von Abfallverbrennungsanlagen in zunehmendem Masse nur noch vollständig verbrennbare Luftfilter ohne recyclierbare Komponenten zur Verbrennung annehmen.

In der EP-A-0 581 735 wird ein zur Aufnahme einer Filtertasche dienender Stutzrahmen beschrieben, der aus Faserguß als ein einstückiger Kragen hergestellt wird. Eine Mehrzahl derartiger Filtertaschen samt Kragen werden zu einem Filterpaket nebeneinander angeordnet und aussen von einem Frontrahmen umgeben.

Mit der Erfindung soll die Aufgabe gelöst werden, einen preisgünstigen Frontrahmen zu schaffen, welcher zusammen mit den Filtertaschen als Ganzes in Abfallverbrennungsanlagen beseitigt werden kann unter Vermeidung von nicht verbrennbaren oder recyclierbaren Bestandteilen.

Die Erfindung mit der diese Aufgabe gelöst wird, ergibt sich je aus dem kennzeichnenden Teil der Patentansprüche 1 und 6.

Das erfindungsgemässe Herstellungsverfahren ermöglicht die Verwendung preisgünstiger, leichter Materialien, beispielsweise Recycling-Karton zur Herstellung der Frontrahmen. Durch die besondere Schichtung um einen Kern herum und die Verleimung sowie durch die mechanische Verbindung von hochkant stehenden Materialstreifen wird eine hohe Steifigkeit und Stabilität eines solchen Frontrahmens erreicht. Zudem ist der Zusammenbau solcher Frontrahmen aus den einzelnen Bestandteilen mittels Roboter möglich.

In der Zeichnung ist ein Ausführungsbeispiel der Erfindung dargestellt.
Es zeigen:
- Fig. 1: ein erster Schritt zur Herstellung eines Frontrahmens mit ersten stumpf gegeneinander stossenden Boden-Materialstreifen
- Fig.2: zwei je mit Schlitzen versehene, ineinander steckbare zweite Materialstreifen
- Fig.3: ein weiterer Schritt, wobei auf die ersten Materialstreifen ein aus zweiten Materialstreifen gebildeter Rahmen aufgesetzt wird.
- Fig 4: ein weiterer Schritt mit Befestigung von Kernstücken am Hilfsrahmen und auf den Boden-Materialstreifen
- Fig.5: ein nächster Schritt, bei dem hochkant stehende, dritte Materialstreifen auf der Aussenseite befestigt werden
- Fig.6: ein letzter Schritt, wobei Deckel-Materialstreifen aufgesetzt werden
- Fig.7: einen Schnitt durch einen fertigen Frontrahmen
- Fig.8: eine Draufsicht auf einen fertigen Frontrahmen mit zwei in diesen eingesetzten Filtertaschen.
- Fig.9: einen Schnitt nach den Linien IX-IX in Fig. 8

Der Frontrahmen 17 dient zur Aufnahme von sackartigen Filtertaschen 12. Solche frontseitig vertikal angeordnete Frontrahmen 17 mit eingesetzten Filtertaschen 12 lassen sich gruppenweise zu Filteranlagen zusammenbauen, wobei die zu reinigende Luft bzw. das Gas von der offenen Filtertaschenseite zuströmt und nach dem Durchgang durch das Filtermedium die Filtertaschen in gereinigtem Zustand auf der andern Seite verlässt. Die Frontrahmen 17 haben eine quadratische oder rechteckige Form und bestehen aus brennbarem Material, vorzugsweise Karton, insbesondere Hart- oder Lederkarton, wobei der Kern vorzugsweise aus einer oder mehreren Wellkartonschichten gebildet wird.

Die Herstellung eines derartigen Frontrahmens geschieht auf folgende Weise:

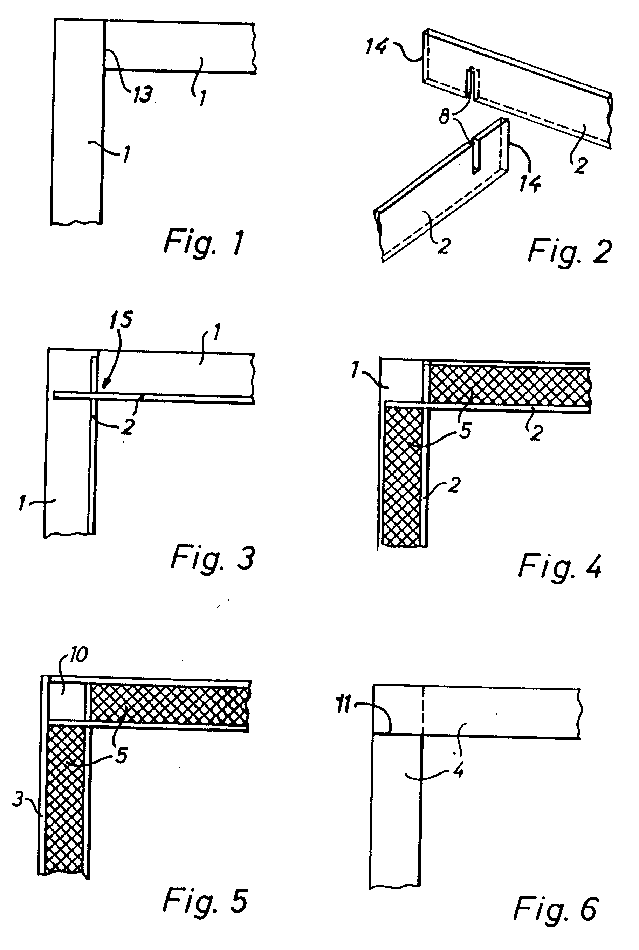

Vorerst werden - gemäss Fig.1 - vier erste längliche, flache Materialstreifen 1 je stumpf gegeneinander anstossend auf einer ersten, vorzugsweise horizontalen Ebene zu einem Viereck zusammengefügt. Auf den inneren Randbereich dieses Vierecks wird ein aus zweiten, hochkant stehenden Materialstreifen 2 bestehender Hilfsrahmen 15 aufgesetzt und verklebt. Dieser Hilfsrahmen 15 wird, wie in Fig.2 angedeutet ist, dadurch gebildet, dass je zwei benachbarte zweite Materialstreifen 2 je mit gegengleichen Schlitzen 8 versehen werden.

Die Tiefe dieser Schlitze 8 entspricht je mindestens der halben Höhe der Materialstreifen 2. Diese Schlitze 8 haben von den Stirnseiten 14 der Materialstreifen 2 einen Abstand der etwas geringer ist als es der Breite der ersten Materialstreifen 1 entspricht

In einem weiteren Schritt - gemäss Fig.4 - werden längliche Kernstücke 5 je mit dem Rahmen und den Boden-Materialstreifen verklebt. Diese Kernstücke 5 bestehen aus einer oder mehreren untereinander verbundenen Lagen von Wellkarton. Wie aus Fig.5 zu erkennen ist, werden auf der Aussenseite der Kernstücke 5 je hochkant stehende, dritte Materialstreifen 3 durch Klebstoff befestigt. Diese vier aussen ringsherum angebrachten Materialstreifen 3 liegen auf den Aussenkanten der ersten Materialstreifen 1 auf. An den vier geschlossenen Ecken entsteht je ein Hohlraum 10, der entweder leer gelassen werden kann oder mit einem brennbaren Material, beispielsweise mit Abfällen der Kernstücke 5 ausgefüllt werden kann.

Schliesslich werden auf der Oberseite vier als Deckel dienende vierte Materialstreifen 4 aufgesetzt. Diese befinden sich somit in einer Ebene parallel zur Ebene der ersten Materialstreifen 1. Die Höhe der Materialstreifen 2 und 3 sowie der Kernstücke 5 ist so gewählt, dass sie oben praktisch bündig verlaufen. Damit sich ein möglichst guter Verbund ergibt, werden die Stossflächen 13 der ersten Materialstreifen und die Stossflächen 11 der vierten Materialstreifen 4 so gewählt, dass sie rechtwinklig zueinander zu liegen kommen.

Damit ein formstabiler, weitgehend verwindungssteifer Frontrahmen 1 entsteht, werden die Materialstreifen und die Kernstücke durch Klebstoff, vorzugsweise Heisskleber untereinander verbunden, ebenso alle Stossflächen der verschiedenen Materialstreifen, wodurch ein allseits geschlossener Körper entsteht.

Je nach dem vorgesehenen Verwendungszweck können die Frontrahmen 1 Quadratform oder unterschiedliche Rechteckformate haben und auch die Querschnittsform der Rahmenseiten kann quadratisch oder rechteckig sein.

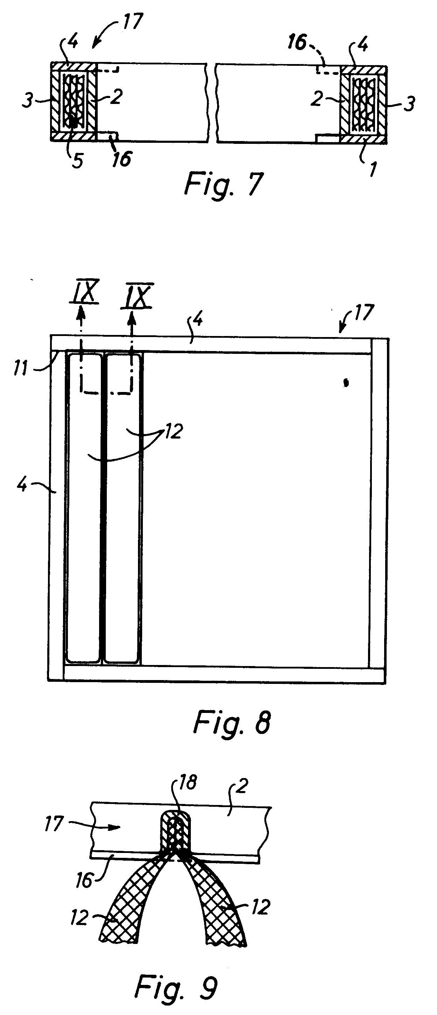

Eine Ausführungsvariante besteht darin, dass die ersten und/oder die vierten Materialstreifen in Richtung gegen das Frontrahmen-Innere vorstehende Ansätze 16 haben, wie dies in Fig.7 in unterbrochenen Linien angedeutet ist. Diese Ansätze 16 dienen zur seitlichen Abstützung der Klemmbügel 18 der Filtertaschen, wie dies aus Fig. 9 hervorgeht.

Zur Entsorgung brauchen die mit Staub oder dgl. Filterrückständen gesättigten Filtertaschen 12 von den sie umgebenden Frontrahmen 17 nicht getrennt zu werden, sondern können als Ganzes in Abfallverbrennungsanlagen verbrannt werden.

## Patentansprüche

1. Verfahren zur Herstellung eines Frontrahmens zur Aufnahme von Filtertaschen für Filteranlagen, insbesondere Luftfilteranlagen, wobei der Frontrahmen (17) aus mehreren flachen Materialstreifen um Kernstücke (5) herum zusammengesetzt wird, wobei vier erste, den Rahmenboden bildende Materialstreifen (1) in einer ersten Ebene flach in Form eines Vierecks gegeneinander stossend angeordnet werden, sodann vier miteinander zu einem Hilfsrahmen verbundene, zweite Materialstreifen (2) hochkant auf den Innenrand der ersten Materialstreifen (1) aufgesetzt werden, auf die Aussenkanten der ersten Materialstreifen (1) vier hochkant stehende dritte Materialstreifen (3) aufgesetzt werden, vor oder nach dem Anbringen der dritten Materialstreifen (3) Einsetzen von vier mindestens gegen die zweiten Materialstreifen (2) anliegende und auf den ersten Materialstreifen (1) aufliegende Kernstücke (5), sodann Aufsetzen von vier das Gebilde überdeckende Deck-Materialstreifen (4) in einer zweiten, zur ersten parallelen Ebene, wobei die Materialstreifen (1-4) untereinander und mit den Kernstücken (5) verklebt werden, und die Materialstreifen (1-4) sowie die Kernstücke (5) aus brennbarem Material bestehen.

2. Verfahren nach Anspruch 1, dadurch gekennzeichnet, dass die zweiten Materialstreifen (2) mittels Schlitzen (8) ineinandergreifen, die Schlitze (8) von den Stirnseiten (14) distanziert angebracht werden und sich über eine Teilhöhe des Materialstreifens (2) erstrecken.

3. Verfahren nach einem der Ansprüche 1 oder 2, dadurch gekennzeichnet, dass die Kernstücke (5) je mindestens an die zweiten Materialstreifen (2) angeklebt werden.

4. Verfahren nach einem der Ansprüche 1-3, dadurch gekennzeichnet, dass die Materialstreifen (1-4) aus Karton, insbesondere Hart- oder Lederkarton hergestellt werden.

5. Verfahren nach einem der Ansprüche 1-4, dadurch gekennzeichnet, dass die Kernstücke (5) aus mehreren miteinander verklebten Wellkartonschichten hergestellt werden.

6. Frontrahmen zur Aufnahme von Filtertaschen für Filteranlagen, insbesondere Luftfilteranlagen, wobei er einen aus im Viereck angeordneten Kernstücken (5) bestehenden Kern aufweist, um den herum flache Materialstreifen (1-4) angeordnet und verklebt sind, vier erste Boden-Materialstreifen im Viereck in einer ersten Ebene liegen, zweite flache Materialstreifen (2) hochkant auf die Innenkante der ersten Materialstreifen (1) aufgesetzt sind und je benachbarte Endpartien miteinander zu einem Hilfsrahmen (15) verbunden sind, dritte hochkant angeordnete Materialstreifen (3), die die Kernstücke (5) aussen umgeben, und Deck-Materialstreifen (4) in einer zweiten, zur ersten parallelen Ebene vorhanden sind, und das Ganze aus brennbarem Material besteht.

7. Frontrahmen nach Anspruch 6, dadurch gekennzeichnet, dass die Materialstreifen aus Karton, insbesondere Lederkarton und die Kernstücke aus mehreren Schichten von Wellkarton bestehen.

8. Frontrahmen nach Anspruch 6 oder 7, dadurch gekennzeichnet, dass je zwei benachbarte zweite Materialstreifen (2) je einen von ihren Stirnseiten (14) distanzierte gegengleiche Schlitze aufweisen, die sich je über einen Teilbereich der Materialstreifenhöhe erstrecken und je zwei benachbarte Materialstreifen mittels dieser Schlitze zur Bildung des Hilfsrahmens (15) ineinandergreifen.

9. Frontrahmen nach einem der Ansprüche 6-8, dadurch gekennzeichnet, dass die ersten und/oder vierten Materialstreifen gegenüber den dritten Materialstreifen (3) gegen die Rahmeninnenseite vorstehende Ansätze (16) haben.

10. Frontrahmen nach einem der Ansprüche 6-9, dadurch gekennzeichnet, dass die Materialstreifen (1-4) im Querschnitt ein hochstehendes Rechteck begrenzen.

## Claims

1. Process for the production of a front frame to receive filter bags for filter systems, in particular air filter systems, whereby the front frame (17) is composed of several flat material strips arranged around core pieces (5), whereby four first material strips (1) forming the frame base are arranged to abut against one another flat in the shape of a square in a first plane, then four second material strips (2) joined to one another to form an auxiliary frame are positioned upright on the inside edge of the first material strips (1), four upright third materials strips (3) are placed onto the outside edges of the first material strips (1), before or after the third material strips (3) are attached, four core pieces (5) abutting at least against the second material strips (2) and lying on the material strips (1) are inserted, then four covering material strips (4) covering the structure are attached in a second plane parallel to the first, whereby the material strips (1-4) are glued to one another and to the core pieces (5), and both the material strips (1-4) and the core pieces (5) are made of combustible material.

2. Process according to Claim 1, characterised in that the second material strips (2) intermesh by means of slits (8), said slits (8) being attached at a distance from the face sides (14) and extending over a partial height of the material strip (2).

3. Process according to Claims 1 or 2, characterised in that the core pieces (5) are each glued at least to the second material strips (2).

4. Process according to one of Claims 1-3, characterised in that the material strips (1-4) are made of cardboard, in particular hardboard or leatherboard.

5. Process according to one of Claims 1-4, characterised in that the core pieces (5) are made from several layers of corrugated cardboard glued to one another.

6. Front frame to receive filter bags for filter systems, in particular air filter systems, whereby it has a core comprising core pieces (5) arranged in a square, flat material strips (1-4) are arranged around this and glued, four first base material strips in a square lie in a first plane, second flat materials (2) are placed upright onto the inside edge of the first material strips (1) and respectively adjacent end sections are joined to one another to form an auxiliary frame (15), third material strips (3) arranged upright surround the core pieces (5) on the outside, and covering material strips (4) are provided in a second plane parallel to the first, and the entire structure is made of combustible material.

7. Front frame according to Claim 6, characterised in that the material strips are made of cardboard, in particular leatherboard, and the core pieces are made from several layers of corrugated cardboard.

8. Front frame according to Claim 6 or 7, characterised in that two respectively adjacent second material strips (2) each have a slit diametrically opposed at a distance from their face sides (14), each extending over a part-area of the height of the material strip, and two adjacent material strips respectively intermesh by means of these slits to form an auxiliary frame (15).

9. Front frame according to one of Claims 6-8, characterised in that the first and/or fourth material strips have extensions (16) projecting towards the inside of the frame in relation to the third material strips (3).

10. Front frame according to one of Claims 6-9, characterised in that the material strips (1-4) define an upright rectangle in cross-section.

## Revendications

1. Procédé de fabrication d'un cadre avant de réception de poches formant filtre pour des installations de filtration, notamment des installations de filtration d'air, le cadre (17) avant étant composé de plusieurs bandes de matériau plates entourant des pièces (5) centrales, quatre premières bandes (1) de matériau formant le fond du cadre étant montées dans un premier plan, à plat, en forme de quadrilatère, de manière à se toucher les unes aux autres, puis quatre deuxièmes bandes (2) de matériau, reliées les unes aux autres pour former un cadre auxiliaire, étant dressées de chant sur le bord intérieur des premières bandes (1) de matériau, quatre troisième bandes (3) de matériau dressées de chant étant posées sur les bords extérieurs des premières bandes (1) de matériau, quatre pièces (5) centrales s'appliquant au moins aux deuxièmes bandes (2) de matériau et reposant sur les premières bandes (1) de matériau étant introduites avant ou après le montage des troisièmes bandes (3) de matériau, puis quatre bandes (4) de matériau de couverture recouvrant l'objet étant déposées sur un deuxième plan parallèle au premier, les bandes (1 à 4) de matériau étant collées les unes aux autres et aux pièces (5) centrales et les bandes (1 à 4) de matériau ainsi que les pièces (5) centrales étant en un matériau combustible.

2. Procédé suivant la revendication 1, caractérisé en ce que les deuxièmes bandes (2) de matériau s'interpénètrent au moyen d'entailles (8), les entailles (8) étant ménagées à distance des bords (14) avant et s'étendant sur une partie de la hauteur de la bande (2) de matériau.

3. Procédé suivant l'une des revendications 1 ou 2, caractérisé en ce que les pièces (5) centrales sont collées chacune au moins aux deuxièmes bandes (2) de matériau.

4. Procédé suivant l'une des revendications 1 à 3, caractérisé en ce que les bandes (1 à 4) de matériau sont en carton, notamment en carton dur ou en carton de cuir.

5. Procédé suivant l'une des revendications 1 à 4, caractérisé en ce que les pièces (5) centrales sont fabriquées à partir de plusieurs couches de carton ondulé collées les unes aux autres.

6. Cadre avant de réception de poches formant filtre pour des installations de filtration, notamment des installations de filtration d'air, le cadre avant comportant un noyau constitué de pièces (5) centrales qui sont disposées en quadrilatère, autour desquelles sont montées et collées des bandes (1 à 4) plates de matériau, quatre premières bandes de matériau de fond disposées suivant le quadrilatère se trouvant dans un premier plan, deux deuxièmes bandes (2) de matériau plates étant dressées de chant sur le bord intérieur des premières bandes (1) de matériau et les parties d'extrémité voisines étant reliées entre elles pour former un cadre (15) auxiliaire, des troisièmes bandes (3) de matériau montées de chant, qui entourent extérieurement les pièces (5) centrales, et des bandes (4) de matériau de couverture étant présentes dans un deuxième plan parallèle au premier, et l'ensemble étant en un matériau combustible.

7. Cadre avant suivant la revendication 6, caractérisé en ce que les bandes de matériau sont en carton, notamment en carton de cuir, et en ce que les pièces centrales sont constituées de plusieurs couches de carton ondulé.

8. Cadre avant suivant la revendication 6 ou 7, caractérisé en ce que deux deuxièmes bandes (2) de matériau voisines comportent des entailles diamétralement opposées, qui sont ménagées à distance de leur face (14) frontale et qui s'étendent sur une partie de la hauteur de la bande de matériau associée, et en ce que deux bandes de matériau voisines s'interpénètrent au moyen de ces entailles pour former le cadre (15) auxiliaire.

9. Cadre avant suivant l'une des revendications 6 à 8, caractérisé en ce que les premières et/ou quatrièmes bandes de matériau ont, par rapport aux troisièmes bandes (3) de matériau, des prolongements (16) qui dépassent de la face intérieure du cadre.

10. Cadre avant suivant l'une des revendications 6 à 9, caractérisé en ce que la coupe transversale des bandes (1 à 4) de matériau délimite un rectangle sur chant.
